# FASCICULE DE BREVET EUROPEEN

(11) **EP 1 563 958 B1**
(45) Date de publication et mention de la délivrance du brevet: **15.08.2007**
(21) Numéro de dépôt: 05100865.4
(22) Date de dépôt: 08.02.2005
(51) Int. Cl.: B25B 11/00, B23Q 3/06, B25B 5/14, B64C 1/12

(54) **Procédé et dispositif de préhension et maintien d'un panneau mince, flexible, avec une pluralité de ventouses**
Verfahren und Vorrichtung zum Halten einer dünnen und flexiblen Platte mit mehreren Saugknöpfen
Method and device for holding a thin and flexible pannel with a plurality of vacuum cups

(30) Priorité: 10.02.2004 FR 0401278
(43) Date de publication de la demande: 17.08.2005
(73) Titulaire: AIRBUS France, 31060 Toulouse (FR)
(72) Inventeur: HAMANN, Jean-Christophe, 44500, LA BAULE (FR)
(74) Mandataire: Schmit, Christian Norbert Marie

(56) Documents cités:
- EP-A- 0 490 746
- US-A- 5 457 868
- US-B1- 6 250 619

## Description

La présente invention a trait à un procédé de préhension et de maintien localisé en position isostatique d'un panneau mince, flexible en particulier de forme complexe pouvant être non-développable, selon le préambule de la revendication 1 (voir, par exemple, US-5,457,868-A).

L'invention s'applique à toute pièce en forme de panneau notamment métallique, à paroi de faible épaisseur et de dimensions quelconques pouvant être importante, telles que des panneaux de revêtement de fuselage d'aéronefs.

Du fait, d'une part, de la flexibilité et, d'autre part, des éventuelles irrégularités d'épaisseur, de telles pièces qu'on désignera par la suite d'une manière générale par le vocable « panneaux », des problèmes de mise en référence de l'une des faces de ces panneaux peuvent survenir lors de diverses interventions à effectuer telles qu'usinage, mesure et, d'une manière générale, toutes les fois où il est nécessaire d'avoir une mise en référence temporaire précise, stable d'au moins la partie du panneau où il faut intervenir.

A cet effet, l'invention a pour objet un procédé de préhension et maintien localisé d'un panneau mince, tel que défini dans la revendication 1.

Suivant une autre caractéristique du procédé, on mesure la position par rapport audit support de chaque ventouse afin de calculer la forme réelle de la partie de la face du panneau en regard desdites ventouses.

L'invention a également pour objet un dispositif pour la mise en oeuvre du procédé ci-dessus, tel que défini dans la revendication 4.

Suivant une autre caractéristique du dispositif, à chaque dispositif à ventouse est associé un capteur de mesure de la position de la ventouse par rapport à ladite platine-support.

Une fois toutes les ventouses bloquées en position par rapport à la platine-support, l'ensemble forme un dispositif de maintien de la partie de panneau en regard de la platine dans des conditions isostatiques pouvant servir de référence utile à diverses interventions nécessitant un positionnement stable, sans contraintes au moins dans la zone d'application des ventouses ainsi qu'éventuellement la connaissance précise de la forme réelle de la face du panneau tournée vers les ventouses.

D'autres caractéristiques et avantages ressortiront de la description qui va suivre d'un mode de réalisation du dispositif de l'invention, description donnée à titre d'exemple uniquement et en regard des dessins annexés sur lesquels :
- la figure 1 est une vue en perspective d'un dispositif de maintien en position selon l'invention ;
- la figure 2 est une vue d'un dispositif à ventouse,
- la figure 3 est une vue en coupe axiale du dispositif de la figure 2 ;
- la figure 4a et 4b illustrent le fonctionnement du dispositif à ventouse ;
- la figure 4c est un organigramme de fonctionnement du dispositif à ventouse, et
- la figure 5 est un schéma illustrant l'application sur une face d'un panneau à double courbure d'un dispositif de l'invention;
- les figures 6A, 6B sont des vues en coupe d'un dispositif à ventouse d'un dispositif de maintien selon l'invention.

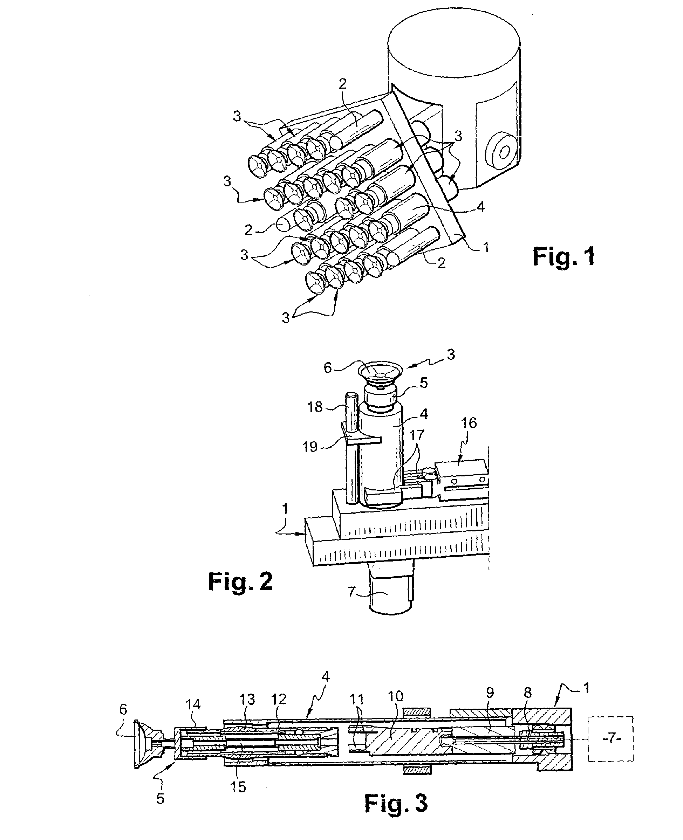

Sur la figure 1, on a représenté un dispositif de préhension et maintien localisé d'un panneau conforme à l'invention.

Le dispositif comprend une platine support 1, par exemple carrée, de 500 mm de côté, sur la face tournée vers le panneau à saisir de laquelle sont disposés en saillie, d'une part, trois butées fixes 2 disposées en triangle et, d'autre part, un certain nombre de dispositifs à ventouse 2 régulièrement distribués, l'ensemble des éléments 2,3 couvrant l'ensemble de la surface de la platine 1.

Les butées 2 sont des pions rectilignes à bout sphérique disposés perpendiculairement à la platine 1 et de même longueur.

Les butées 2 sont de préférence le plus éloigné possible entre elles et sont, comme illustrée par la figure, disposées, deux dans deux angles de la platine 1 et la troisième au milieu du côté opposé de la platine.

Les dispositifs à ventouse 3 sont de préférence régulièrement répartis et alignés sur toute la surface restante de la platine, parallèlement aux butées 2, avec un pas entre dispositifs 3 constant, inférieur à 150 mm.

Chaque dispositif 3 comprend (figures 1 à 3) un fourreau 4 monté mobile axialement sur la platine 1 et dans lequel coulisse un centreur 5 muni à son extrémité d'une ventouse.

Le fourreau 4 est mû par un dispositif d'entraînement-blocage comprenant un moteur 7 entraînant une vis à bille 8 arrêtée dans la platine 1, par l'intermédiaire d'un roulement, un écrou 9 en prise avec la vis 8 et un dispositif d'accrochage 10 solidaire de l'écrou 9 dont les mors 11, lorsqu'ils sont écartés, se plaquent contre la paroi interne du fourreau 4 rendant celui-ci solidaire de l'écrou 9.

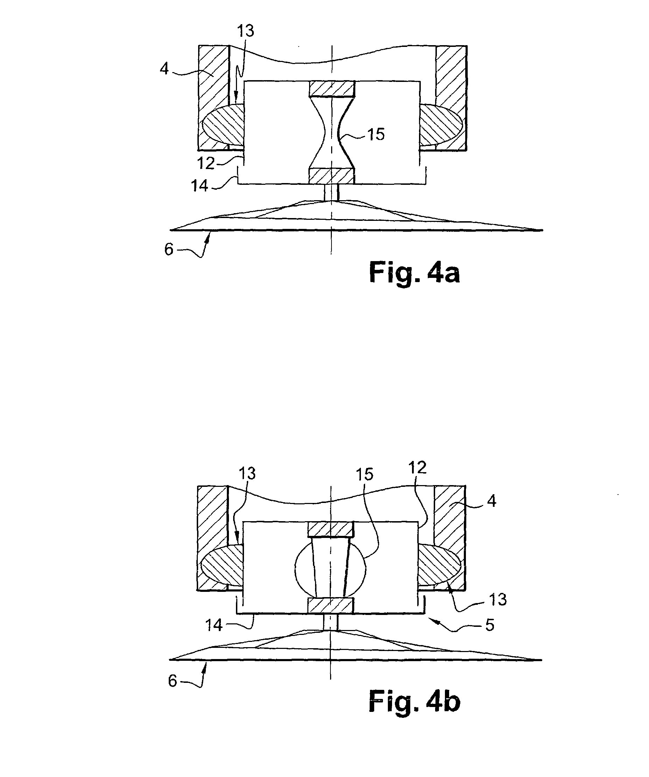

Le fourreau 4 porte à son extrémité le dispositif de centrage (5) et d'aspiration (6) comprenant (figures 4a, 4b) un fourreau 12 relié au fourreau 4 par l'intermédiaire d'une liaison rotulée 13 et fermé par un couvercle 14 mobile par rapport au fourreau 12, axialement à ce dernier sous l'action d'un élément pneumatique dénommé muscle 15, susceptible de contraction (figure 4b) ou d'élongation (relâchement, figure 4a).

En 16, sur la figure 2, est représenté un dispositif de blocage du fourreau 4 par rapport à la platine 1. Le dispositif 16 est fixé sur la platine et enserre par deux bras 17 le fourreau 4.

En 18 est représenté un capteur de mesure de la distance le séparant de la face du panneau en regard, c'est à dire de l'éloignement de la ventouse 6 vis à vis de la platine 1.

Le capteur 18 est fixé par une patte 19 latéralement au fourreau 4.

Le fonctionnement du dispositif décrit ci-dessus est le suivant.

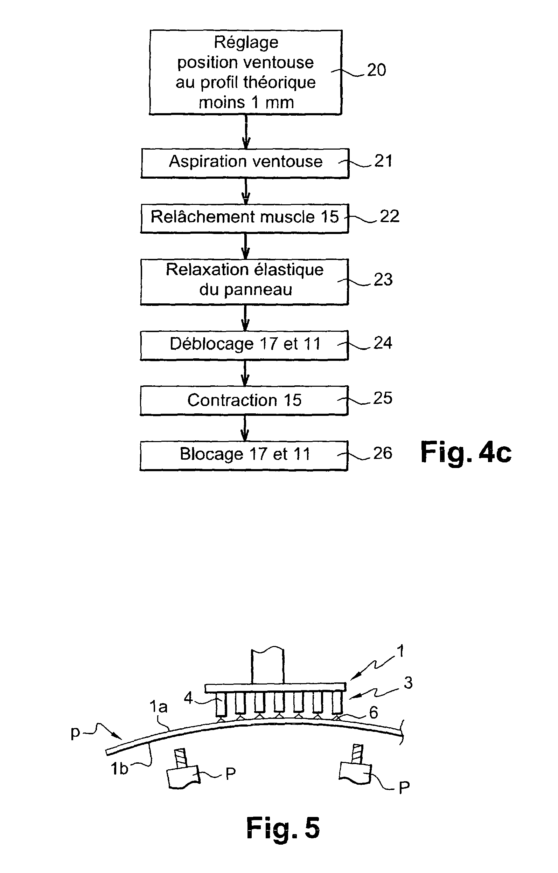

Le panneau à maintenir, par exemple le panneau p (figure 5), est tout d'abord amené en contact par sa face convexe 1 a, par exemple, contre les trois butées 2 du dispositif de la figure 1, sans déformation du panneau, par des moyens appropriés quelconques, par exemple par l'intermédiaire de plusieurs bras pousseurs symbolisés en P sur la figure 5, appliqués contre la face concave 1b en direction de la platine-support 1 du dispositif.

Lorsque le contact est établi un positionnement initial (étape 20, figure 4c) des dispositifs à ventouse 3 est effectué en actionnant le moteur 7 des dispositifs 3.

La mise en rotation de la vis 8 entraîne, les mors 11 du dispositif d'accrochage 10 étant mis en expansion et les bras 17 du dispositif 16 étant desserrés, le déplacement en translation de l'ensemble fourreau 4-centreur 5 en direction de la face 1a du panneau p.

Une fois le fourreau 4 arrivé au contact de la face 1a, cette position étant détectée par le capteur 18, le moteur 7 est arrêté et les bras 17 sont serrés par le dispositif 16 immobilisant ainsi le fourreau 4 par rapport à la platine 1.

L'étape suivante (étape 21, figure 4c) est la mise en dépression des ventouses 6 ensemble. Le panneau p ainsi « aspiré » vient se coller contre le fond des ventouses. Celles-ci étant décalées par rapport à la position théorique du panneau p, celui-ci est mis localement en contrainte.

Les muscles 15 (figure 4a) sont alors relâchés (étape 22, figure 4c) en sorte que, par retour élastique, le panneau p reprend sa forme libre de contrainte, le couvercle 14 se désolidarisant du fourreau 12.

La ventouse 6 est alors collée sur le panneau et l'ensemble 6, 14 étant maintenu par l'élasticité (à vide) du muscle pneumatique 15. Du fait de leur propre poids, faible, et de leur maintien par l'élasticité du muscle 15, lesdits éléments 6, 14 ne sollicitent pas ou peu le panneau p (étape 23, figure 4c).

La totalité des centreurs 5 sont ainsi désolidarisés en même temps de leur fourreau 4.

L'étape suivante consiste à re-rigidifier l'ensemble 1-3, le panneau p ayant repris sa forme naturelle, sans contrainte.

On va opérer à ce moment ventouse par ventouse pour ne pas déformer le panneau.

Ainsi, pour chaque dispositif 3, on va (étape 24, figure 4c) libérer extérieurement le fourreau 4 en desserrant les bras 17 et rétracter les mors 11 pour libérer intérieurement le fourreau 4. En recontractant (étape 25, figure 4c) le muscle 15, l'ensemble 5-4 se rapproche du panneau p et le fourreau 12 se réemboîte dans le couvercle 14 (figure 4b).

La dernière étape (étape 26, figure 4c) consiste à re-immobiliser le fourreau 4 par rapport à la platine 1, par les mors 11 du dispositif 10 et par les bras 17 du dispositif 16.

On opère ainsi successivement avec tous les dispositifs 3.

Le panneau p est, au droit de la platine 1, parfaitement immobilisé, de manière stable, sans déformation ni contrainte dans cette partie du panneau et, de surcroît, on peut connaître la forme réelle de la face 1a en regard de la platine 1 par calcul à partir des mesures données par les capteurs 18 qui donnent la position précise de la face 1a par rapport à la platine 1 au droit de chaque dispositif à ventouse 3. Un calcul par interpolation à partir de ces points de mesure permet de connaître la forme réelle de ladite face 1a.

Comme on peut l'observer sur la figure 5, les fourreaux 4 des dispositifs 3 sont plus ou moins en saillie par rapport à la face de la platine 1 tournée vers le panneau p du fait de la courbure de ce dernier.

Le jeu de ventouses 6 s'adapte automatiquement à la forme (convexe ou concave) du panneau p. Le dispositif tel que représenté sur la figure 1 peut être monté sur un manipulateur multi-axes et être intégré par exemple sur une machine d'usinage.

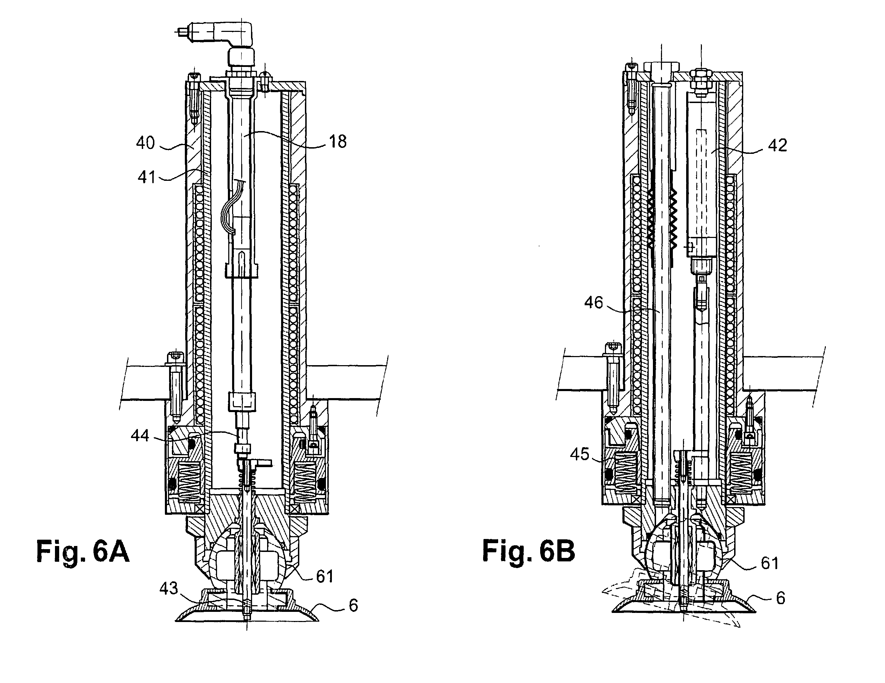

Un exemple de dispositif à ventouse est plus particulièrement représenté en figures 6A et 6B dans le cadre d'une variante de l'invention permettant une préhension du panneau en quatre phases, à savoir accostage, blocage en position des fourreaux des dispositifs à ventouse, relâchement dispositif par dispositif pour obtenir une relaxation élastique du panneau libre de contraintes puis un reblocage du panneau dispositif par dispositif pour re-rigidifier l'ensemble.

Pour l'accostage, le dispositif à ventouse comporte selon cet exemple un guide 40 lequel coulisse un fourreau 4 portant la ventouse 6, montée sur une rotule 61, figure 6A.

le fourreau 4 est actionné par un vérin 42 pour sortir du guide 40 lors de la phase d'accostage jusqu'à entrée en contact d'une pointe de touche 43 avec le panneau, cette pointe de touche venant en contact avec un capteur 44 combiné au capteur 18 de déplacement de la ventouse qui commande l'arrêt du déplacement du fourreau 4. Un dispositif de blocage 45 bloque alors le fourreau en position ce qui solidarise le fourreau 4 au guide 40 en s'opposant à l'effort appliqué par le vérin 42 dont la force de poussée est choisie inférieure à la force développée par le dispositif de blocage.

Un vide est alors créé dans la ventouse 6 à l'aide du tube à vide 46 pour coller les lèvres de la ventouse sur le panneau.

La phase d'accostage a lieu simultanément pour l'ensemble des ventouses sur le panneau et une fois cette phase terminée, l'ensemble des vérins 42 est mis à l'air libre pour qu'ils n'exercent plus aucun effort sur les fourreaux.

Une fois la phase d'accostage terminée, une réorientation des appuis ventouse par ventouse comme représenté en figure 6B est réalisé en augmentant le vide dans chaque ventouse séparément ce qui exerce une traction sur le panneau et en relâchant le blocage par le dispositif de blocage 45. La ventouse et sa rotule se réorientent alors en suivant le retour élastique du panneau lors de ce relâchement.

Une fois la séquence de relâchement ventouse par ventouse terminée, on bloque à nouveau les fourreaux 41 dans les guides 40 pour maintenir le panneau et on bloque la rotule 61 par application d'une dépression entre la rotule et son siège.

Une mesure de la forme du panneau est réalisée une fois le relâchement terminé à l'aide des capteurs 18 de mesure de la position de la ventouse.

L'invention s'applique à tous types de panneaux au sens large défini plus haut, quel que soit le matériau constitutif, tel que métal ou matériau composite et quel que soit le processus de fabrication.

## Revendications

1. Procédé de préhension et maintien localisé d'un panneau mince (p), flexible, en particulier de forme complexe, notamment non-développable, comportant les étapes consistant à :
plaquer l'une des faces (1a) du panneau (p) sans déformation, contre un système d'appui (2) à trois points,
appliquer sur ladite face (1a), dans la zone d'appui, une pluralité de ventouses (6) de saisie, mobiles par rapport à un support de référence (1), et
bloquer par rapport audit support (1) chaque ventouse (6) dans sa position de préhension sans déformation locale de la face (1a) du panneau (p).
**caractérisé en ce qu'**il comporte en outre une étape consistant en un relâchement du blocage de la position des ventouses et une étape ultérieure consistant à re-bloquer chaque ventouse dans sa position de préhension sans déformation locale de la face (1a) du panneau.

2. Procédé suivant la revendication 1, **caractérisé en ce qu'**on mesure la position par rapport audit support (1) de chaque ventouse (6) afin de calculer la forme réelle de la partie de la face (1a) du panneau (p) en regard desdites ventouses (6).

3. Procédé selon la revendication 1 ou 2, **caractérisé en ce que** les ventouses étant orientables, il comporte une étape de réorientation des ventouses par application d'une dépression entre la ventouse et le panneau lors dudit relâchement.

4. Dispositif pour la mise en oeuvre du procédé selon l'une des revendications 1 à 3, comprenant une platine-support (1) portant trois butées (2) de positionnement disposées en triangle et une pluralité de dispositifs à ventouse (3) distribués régulièrement dans l'espace entre lesdites butées (2), chaque dispositif (3) comprenant une ventouse (6) montée coulissante perpendiculairement à la platine (1), et des moyens (7 à 17), aptes à appliquer la ventouse (6) contre la face (1a) du panneau (p), la mettre sous vide, puis la bloquer dans sa position de saisie sans déformation locale dudit panneau, ces moyens constituant des moyens de positionnement-blocage de ventouses (6), **caractérisé en ce que** lesdits moyens de positionnement-blocage comportent des moyens (9,10,11), désolidarisables, d'entraînement en translation d'un fourreau (4, 41) et des moyens (16, 17, 45), désolidarisables, de blocage du déplacement dudit fourreau (4, 41).

5. Dispositif suivant la revendication 4 **caractérisé en ce qu**'à chaque dispositif à ventouse (3) est associé un capteur (18) de mesure de la position de la ventouse (6) par rapport à ladite platine support (1).

6. Dispositif suivant la revendication 4 ou 5, **caractérisé en ce qu**'il comporte un centreur (5) monté coulissant dans ledit fourreau (4) et relié à une ventouse (6) par l'intermédiaire d'un muscle (15) contractible.

7. Dispositif selon l'une des revendications 4 à 6, **caractérisé en ce que** les ventouses (6) sont des ventouses orientables reliées aux fourreaux par l'intermédiaire de rotules (61).

8. Dispositif selon l'une des revendications 4 à 7 **caractérisé en ce que** les ventouses (6) sont associées à des pointes de touche (43) de détection de contact avec le panneau (p).

9. Dispositif suivant l'une des revendications 4 à 8, **caractérisé en ce que** lesdits moyens de positionnement-blocage des ventouses (6) comportent un moteur (7).

## Claims

1. A method of gripping and localised holding of a flexible thin panel (p), in particular of complex shape, in particular non-developable, comprising the steps consisting of:
pressing one of the faces (1a) of the panel (p), without deformation, against a three-point bearing system (2),
applying to said face (1a), in the bearing zone, a plurality of gripping suckers (6), able to move with respect to a reference support (1), and
locking each sucker (6) with respect to said support (1) in its gripping position without local deformation of the face (1 a) of the panel (p),
**characterised in that** it also comprises a step consisting of releasing the locking of the position of the suckers and a subsequent step consisting of relocking each sucker in its gripping position without local deformation of the face (1a) of the panel.

2. A method according to claim 1, **characterised in that** the position of each sucker (6) with respect to said support (1) is measured in order to calculate the actual shape of the part of the face (1 a) of the panel (p) opposite said suckers (6).

3. A method according to claim 1 or 2, **characterised in that**, the suckers being orientable, it comprises a step of re-orienting the suckers by applying a negative pressure between the sucker and the panel at the time of said release.

4. A device for implementing a method according to one of claims 1 to 3, comprising a support plate (1) carrying three positioning stops (2) disposed in a triangle and a plurality of sucker devices (3) distributed regularly in the space between said stops (2), each device (3) comprising a sucker (6) mounted so as to slide perpendicularly to the plate (1), and means (7 to 17) able to apply the sucker (6) against the face (1a) of the panel (p), putting it under vacuum, then locking it in its gripping position without local deformation of said panel, these means constituting means for positioning and locking suckers (6), **characterised in that** said positioning and locking means comprise disconnectible means (9, 10, 11) for driving a sheath (4, 41) in translation and disconnectable means for locking the movement of said sheath (4, 41).

5. A device according to claim 4, **characterised in that**, with each sucker device (3), there is associated a sensor (18) for measuring the position of the sucker (6) with respect to said support plate (1).

6. A device according to claim 4 or 5, **characterised in that** it comprises a centring device (5) mounted so as to slide in said sheath (4) and connected to a sucker (6) by means of a contractible member (15).

7. A device according to one of claims 4 to 6, **characterised in that** the suckers (6) are orientable suckers connected to the sheaths by means of swivels (61).

8. A device according to one of claims 4 to 7, **characterised in that** the suckers (6) are associated with touch points (43) for detecting contact with the panel (p).

9. A device according to one of claims 4 to 8, **characterised in that** said means for positioning and locking the suckers (6) comprise a motor (7).

## Patentansprüche

1. Verfahren zum räumlich begrenzten Ergreifen und Halten einer flexiblen dünnen Platte (p), insbesondere mit komplexer Form, die insbesondere nicht abwickelbar ist, das die Schritte umfasst, die darin bestehen:
eine der Flächen (1a) der Platte (p) ohne Verformung gegen ein Dreipunkt-Abstützungssystem (2) zu drücken,
auf die Fläche (1a) in der Abstützzone mehrere vorstehende Saugnäpfe (6), die in Bezug auf einen Referenzträger (1) beweglich sind, aufzubringen und
jeden Saugnapf (6) in Bezug auf den Träger (1) in seiner Greifposition ohne lokale Verformung der Fläche (1a) der Platte (p) zu blockieren,
**dadurch gekennzeichnet, dass** es außerdem einen Schritt, der in einer Lösung der Blockierung der Position der Saugnäpfe besteht, und einen späteren Schritt, der darin besteht, jeden Saugnapf in seiner Greifposition ohne lokale Verformung der Fläche (1a) der Platte erneut zu blockieren, umfasst.

2. Verfahren nach Anspruch 1, **dadurch gekennzeichnet, dass** die Position jedes Saugnapfes (6) in Bezug auf den Träger (1) gemessen wird, um die wirkliche Form des Teils der Fläche (1a) der Platte (p) gegenüber den Saugnäpfen (6) zu berechnen.

3. Verfahren nach Anspruch 1 oder 2, **dadurch gekennzeichnet, dass** es dann, wenn die Saugnäpfe orientierbar sind, einen Schritt des Umorientierens der Saugnäpfe durch Erzeugung eines Unterdrucks zwischen dem Saugnapf und der Platte bei der Lösung der Blockierung umfasst.

4. Vorrichtung zum Ausführen des Verfahrens nach einem der Ansprüche 1 bis 3, die eine Trägerplatine (1), die drei Positionierungsanschläge (2) trägt, die in einem Dreieck angeordnet sind, und mehrere Saugnapfvorrichtungen (3), die in einem Raum zwischen den Anschlägen (2) regelmäßig verteilt sind, umfasst, wobei jede Vorrichtung (3) einen Saugnapf (6), der senkrecht zu der Platine (1) gleitend angebracht ist, sowie Mittel (7 bis 17) aufweist, die so beschaffen sind, dass sie den Saugnapf (6) gegen die Fläche (1a) der Platte (p) drängen, ihn evakuieren und dann in seiner vorstehenden Position ohne lokale Verformung der Platte blockieren, wobei diese Mittel Mittel zum Positionieren/Blockieren der Saugnäpfe (6) bilden, **dadurch gekennzeichnet, dass** die Positionierungs/Blockierungsmittel abkoppelbare Mittel (9, 10, 11) zum translatorischen Antreiben einer Hülse (4, 41) und abkoppelbare Mittel (16, 17, 45) zum Blockieren der Verlagerung der Hülse (4, 41) umfassen.

5. Vorrichtung nach Anspruch 4, **dadurch gekennzeichnet, dass** jeder Saugnapfvorrichtung (3) ein Sensor (18) zum Messen der Position des Saugnapfes (6) in Bezug auf die Trägerplatine (1) zugeordnet ist.

6. Vorrichtung nach Anspruch 4 oder 5, **dadurch gekennzeichnet, dass** sie einen Zentrierer (5) umfasst, der in der Hülse (4) gleitend angebracht und über einen kontrahierbaren Muskel (15) mit einem Saugnapf (6) verbunden ist.

7. Vorrichtung nach einem der Ansprüche 4 bis 6, **dadurch gekennzeichnet, dass** die Saugnäpfe (6) orientierbare Saugnäpfe sind, die mit den Hülsen über Kugelgelenke (61) verbunden sind.

8. Vorrichtung nach einem der Ansprüche 4 bis 7, **dadurch gekennzeichnet, dass** die Saugnäpfe (6) Berührungspunkten (43) zugeordnet sind, um einen Kontakt mit der Platte (p) zu erfassen.

9. Vorrichtung nach einem der Ansprüche 4 bis 8, **dadurch gekennzeichnet, dass** die Mittel zum Positionieren/Blockieren der Saugnäpfe (6) einen Motor (7) umfassen.
